(19) Europäisches Patentamt

European Patent Office

Office européen des brevets

(11) **EP 0 605 281 B1**

(12) **FASCICULE DE BREVET EUROPEEN**

(45) Date de publication et mention
de la délivrance du brevet:
**16.02.2000 Bulletin 2000/07**

(51) Int. Cl.⁷: **H04R 3/00**, G01S 5/20

(21) Numéro de dépôt: **93403076.8**

(22) Date de dépôt: **17.12.1993**

(54) **Procéde de débruitage vectoriel de la parole et dispositif de mise en oeuvre**

Verfahren für die vektorielle Sprachrauschunterdrückung und Gerät zu seiner Durchführung

Method of vectorial noise reduction in speech and device for performing said method

(84) Etats contractants désignés:
**BE GB NL**

(30) Priorité: **30.12.1992 FR 9215904**

(43) Date de publication de la demande:
**06.07.1994 Bulletin 1994/27**

(73) Titulaire: **THOMSON-CSF SEXTANT**
**78141 Vélizy Villacoublay (FR)**

(72) Inventeur: **Gulli, Christian**
**F-92402 Courbevoie cedex (FR)**

(74) Mandataire:
**Chaverneff, Vladimir et al**
**Thomson-CSF Propriété Intellectuelle,**
**13, Avenue du Président Salvador Allende**
**94117 Arcueil Cédex (FR)**

(56) Documents cités:
- **IEEE TRANSACTIONS ON VEHICULAR TECHNOLOGY, vol.40, no.1, Février 1991, NEW YORK US pages 194 - 202 INGVAR CLAESSON ET AL. 'A Multi-DSP Implementation of a Broad-Band Adaptive Beamformer for Use in a Hands-Free Mobile Radio Telephone'**
- **SPEECH COMMUNICATION, vol.9, no.5/6, Décembre 1990, AMSTERDAM NL pages 433 - 442 DIRK VAN COMPERNOLLE ET AL. 'Speech Recognition in Noisy Environments with the Aid of Microphone Arrays'**
- **IEEE TRANSACTIONS ON ANTENNAS AND PROPAGATION, vol.AP-30, no.1, Janvier 1982, NEW YORK US pages 27 - 34 LLOYD J. GRIFFITHS ET AL. 'An Alternative Approach to Linearly Constrained Adaptive Beamforming'**
- **COMPUTER SPEECH AND LANGUAGE, vol.6, no.2, Avril 1992, LONDON GB pages 129 - 152 HARVEY F. SILVERMAN ET AL. 'A two-stage algorithm fop determining talker location from linear microphone array data'**
- **PROCEEDINGS OF EUSIPCO-88 FOURTH EUROPEAN SIGNAL PROCESSING CONFERENCE, vol.1, 5 Septembre 1988, GRENOBLE FR pages 299 - 302 JOSEPH LARDIES ET AL. 'Localisation of Radiating Sources by an Array of Sensors'**

**Description**

La présente invention se rapporte à un procédé de débruitage vectoriel de la parole et à un dispositif de mise en oeuvre.

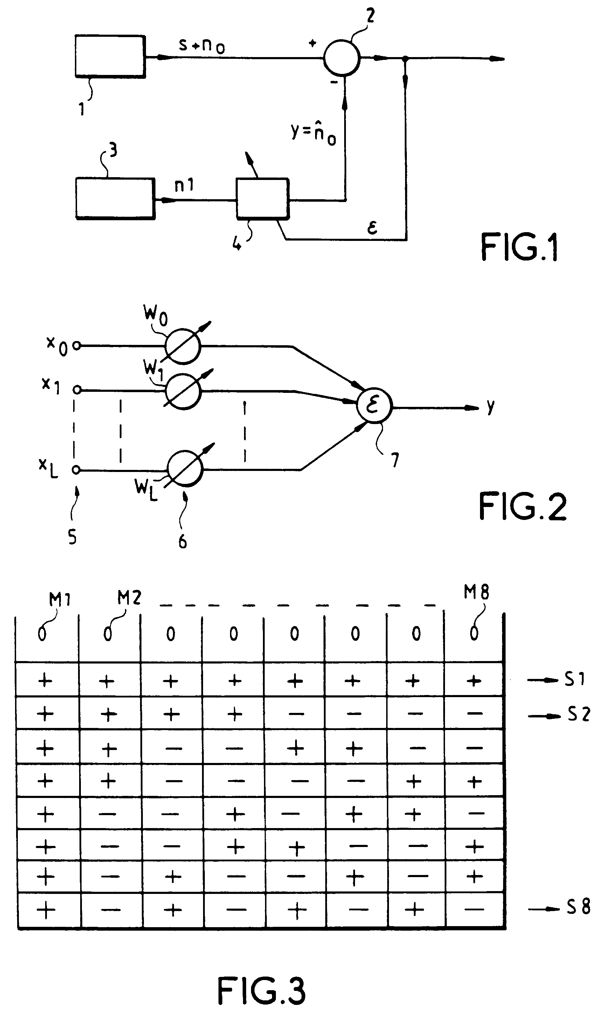

Des procédés connus de débruitage de la parole font appel au filtrage linéaire. On a représenté en figure 1 un dispositif classique de mise en oeuvre d'un tel procédé. Ce dispositif comporte essentiellement une source de signal bruitée (signal de parole) 1 reliée à l'entrée + d'un soustracteur 2. Une source 3 de bruit seul est reliée via un filtre adaptatif 4 à l'entrée de soustraction du soustracteur 2. La sortie du soustracteur 2 qui constitue la sortie du débruiteur, est par ailleurs reliée à l'entrée de commande du filtre 4 pour lui envoyer un signal $\varepsilon$ d'erreur résiduelle.

La source 3 constitue un modèle de bruit, au sens d'un certain critère, par exemple la minimisation d'une erreur quadratique, ce bruit étant soustrait adaptativement du signal bruité. Le principe de fonctionnement de ce dispositif repose sur un postulat selon lequel il y a stationnarité du signal utile s, du bruit $n_o$ affectant ce signal, du modèle de bruit $n_1$ et du signal de sortie y du filtre 4, et que, de plus, il existe une décorrélation entre s et $n_o$, et entre s et $n_1$, et qu'il existe une forte corrélation entre $n_o$ et $n_1$.

Le signal de sortie e vaut : $\varepsilon = s + n_o - y$
soit : $\varepsilon^2 = s^2 + (n_o - y)^2 + 2s(n_o - y)$ , ce qui donne, pour les puissances :

$$E[\varepsilon^2] = E[s^2] + E[(n_o - y)^2]$$

Le signal de sortie n'étant pas affecté par le filtrage adaptatif,
on a :

$$E\min[\varepsilon^2] = E[s^2] + E\min[(n_o - y)^2]$$

La sortie du filtre 4 est ajustée de façon que Emin soit minimisée. Cette minimisation de la puissance totale de sortie conduit à une réduction de la puissance du bruit, et par voie de conséquence à une maximisation du rapport signal/bruit.

Au mieux, on obtient :

$$E[(n_o - y)^2] = 0, \qquad soit: E_{min}[\varepsilon^2] = E[s^2]$$

avec $y = \hat{n}_o$ et $\hat{\varepsilon} = \hat{s}$

En d'autres termes, lorsque le signal de la source 3 n'est pas décorrélé du signal de la source 1, on a :

$$E[\varepsilon^2] = E[(s+n_o)^2] + 2E[-y(s+n_o)] + E[y^2]$$
$$= E[(s+n_o)^2] + E[y^2]$$

et la minimisation de la puissance de sortie force les poids adaptatifs du filtre 4 vers zéro, ce qui force $E[y^2]$ vers zéro. Cette solution est bien connue de l'homme du métier. De façon classique, le filtre adaptatif 4 est du type LMS (Least Mean Square, c'est-à-dire minimisation de l'erreur quadratique), ou bien du type RLS (Recursive Least Square = moindre carré récursif).

Le principal défaut de cette solution connue est l'impérieuse nécessité de disposer physiquement de cette source de bruit 3. Cette source peut comporter une part plus ou moins importante de signaux ne présentant pas les caractéristiques du bruit seul. Les performances du procédé de débruitage en sont alors largement affectées, comme le démontrent les calculs théoriques classiques, qui ne sont pas repris ici.

Une première possibilité pour remédier à ce défaut serait de mettre en oeuvre la "diversité fréquentielle". Cette solution consiste essentiellement à traiter par DFT (transformée de Fourier discrète) le signal bruité, et à produire, à partir de sa valeur de puissance, le signal y à en soustraire en passant par la transformée de Fourier discrète inverse de cette puissance. Ce traitement consiste à décomposer le signal utile bruité en sous-bandes indépendantes, par exemple par analyse de Fourier, puis à traiter chaque sous-bande indépendamment pour augmenter la taille de l'espace vectoriel d'observation. Ce type de découpage est inexploitable pour le traitement de la parole, puisque l'on sait que le signal de parole n'est pas fréquentiellement stationnaire, et n'occupe pas, statistiquement, les mêmes bandes fréquentielles (ce qui se produit par exemple avec les structures voisées).

Une autre solution serait l'exploitation de la "diversité temporelle". Cette solution n'est pas non plus exploitable, car la stationnarité de l'émission vocale n'est pas physiquement réaliste. Tout au plus, on pourrait observer une stationnarité sur quelques dizaines de trames de 25,6 ms (correspondant à 256 points d'un signal échantillonné à 10 kHz) pour des noyaux vocaliques stables, mais cette stationnarité serait réduite à une durée égale à celle de 1 à 3 trames pour des plosives (sons tels que "t").

Une dernière solution serait la "diversité spatiale", qui consiste à répartir dans l'espace plusieurs points de prise de signal (prise d'information vectorielle). Le filtrage serait alors réalisé comme schématiquement représenté en figure 2.

On dispose, face à un locuteur, un ensemble 5 de (L+1) microphones qui peuvent par exemple être équi-espacés, dont les signaux de sortie sont notés $x_o$, $x_1$ ... $x_L$. Chacun de ces microphones est suivi d'un filtre adaptatif bande étroite, dont l'ensemble est référencé 6, ces filtres étant respectivement référencés $W_o$, $W_1$ ... $W_L$. Leurs sorties sont reliées à un sommateur 7 dont la sortie constitue celle du dispositif.

On note $X_k$ l'un quelconque des vecteurs d'entrée, $W_k^T$ le vecteur transposé, du poids à appliquer au filtre, et $g_k$ le scalaire de sortie.

On a :

$$g_k = X_k^T W_k = W_k^{\ T} X_k$$

avec $Wk = [W_ok,\ W_1k,...W_Lk]^T$

A un instant donné (déterminé par exemple par échantillonnage et blocage), on dispose de L signaux d'entrée. L'émission de parole affecte tous les signaux de sortie des microphones 5, les différences entre ces signaux étant principalement dues à la différence de temps de propagation entre le locuteur et les différents microphones. De façon connue en soi, le traitement spatial consiste à former une antenne par formation de voies conventionnelles (généralement par combinaisons linéaires des signaux des microphones), pour dépointer par déphasage (ou par retard pur) le lobe de directivité de l'antenne ainsi formée. Les limitations citées ci-dessus pour les autres procédés connus restent valables.

On connaît d'après les documents IEEE TRANSACTIONS ON VEHICULAR TECHNOLOGY, vol. 40, n° 1, février 1991, NEW YORK US, pages 194-202, INGVAR CLAESSON ET AL. 〈 A Multi-DSP Implementation of a Broad-Band Adaptative Beamformer for Use in a Hands-Free Mobile Radio Telephone 〉, SPEECH COMMUNICATION, vol. 9, n° 5/6, décembre 1990, AMSTERDAM NL, pages 433-442, DIRK VAN COMPERNOLLE ET AL. 〈 Speech Recognition in Noisy Environments with the Aid of Microphone Arrays 〉, et IEEE TRANSACTIONS ON ANTENNAS AND PROPAGATION, vol. AP-30, n° 1, janvier 1982, NEW YORK US, pages 27-34, LLOYD J. GRIFFITHS ET AL. 〈 An Alternative Approach to Linearly Constrained Adaptive Beamforming 〉 des procédés de débruitage à l'aide de dispositions classiques, rectilignes, de microphones, présentant également l'une au moins des limitations précitées.

La présente invention a pour objet un procédé de débruitage vectoriel de la parole permettant d'obtenir une source de bruit de référence présentant la meilleure corrélation possible avec le bruit affectant la parole bruitée, et ce, quel que soit le contenu vocalique de la parole bruitée, sans contraintes particulières pour la fréquence ou la durée du signal de parole.

La présente invention a également pour objet un dispositif de mise en oeuvre de ce procédé, dispositif qui soit simple et peu onéreux.

Le procédé conforme à l'invention consiste à effectuer une prise de son vectorielle à l'aide d'au moins quatre microphones équiespacés disposés devant la source de signaux à traiter, à échantillonner de façon synchrone les signaux de tous les microphones, à former des combinaisons linéaires par additions et soustractions des signaux desdits microphones, de façon à obtenir, dans la direction de la source un lobe principal de sensibilité, la somme de tous les signaux de sortie des microphones représentant le signal bruité, les autres combinaisons, comportant chacune autant de soustractions que d'additions de signaux, et étant utilisées en tant que sources de bruit seul et traitées par un filtre vectoriel adaptatif pour produire une estimation du bruit que l'on soustrait au signal bruité.

La présente invention sera mieux comprise à la lecture de la description détaillée d'un mode de réalisation, pris à titre d'exemple non limitatif, et illustrée par le dessin annexé, sur lequel :

- les figures 1 et 2, déjà décrites ci-dessus, sont des blocs-diagrammes de dispositifs de débruitage et de filtrage connus ;
- la figure 3 est un tableau d'un exemple, conforme à l'invention, de combinaisons linéaires de signaux de sortie d'un ensemble de huit microphones ;
- la figure 4 représente les quatre premiers diagrammes de directivité d'un ensemble de huit microphones, disposés, conformément à l'invention, face à un locuteur ;
- la figure 5 est un bloc-diagramme d'un dispositif de filtrage à large bande utilisé dans le dispositif de l'invention ; et
- la figure 6 est un bloc-diagramme d'un dispositif débruiteur conforme à l'invention.

L'invention est décrite ci-dessous en référence au débruitage de l'émission vocale d'un locuteur situé en milieu bruité, mais il est bien entendu qu'elle n'est pas limitée à une telle application, et peut être mise en oeuvre pour le débruitage des signaux utiles de toute source sonore que l'on peut supposer ponctuelle et située en milieu bruité, et éventuellement mobile.

Dans l'exemple décrit ci-dessous, on dispose face au locuteur, à une distance habituelle de celui-ci (distance d'environ 1 à 4 m par exemple) deux ensembles comportant chacun par exemple huit microphones alignés et équi-espacés. Le pas de la distance entre microphones voisins est par exemple de l'ordre de quelques centimètres à une dizaine de centimètres environ. A titre d'exemple, pour un pas d = 10 cm, la fréquence maximale traitée est: fmax: C/2d, soit environ 1,7 kHz, C étant la vitesse du son dans l'air. Ces deux ensembles sont par exemple disposés en croix. Toutefois, le nombre de microphones et leur disposition peuvent être différentes. Ces microphones peuvent par exemple être au nombre de quatre ou d'un autre multiple de quatre pour chaque ensemble, et ils peuvent être par exemple disposés en forme de "V", en cercle. De préférence, ces deux ensembles sont coplanaires.

Les huit microphones de chacun de ces deux ensembles sont référencés M1 à M8. Leurs signaux de sortie sont combinés entre eux selon huit combinaisons différentes. L'une de ces combinaisons (1ère ligne du tableau de la figure 3) fournit un signal résultant S1, et elle est celle correspondant à l'addition de tous ces signaux. Les sept autres combinaisons comportent chacune quatre additions et quatre soustractions et fournissent respectivement les signaux résultants S2 à S8. Ainsi, par exemple, la combinaison de la deuxième ligne du tableau de la figure 3 correspond à l'addition des signaux de M1 à M4, les signaux de M5 à M8 étant tous soustraits, donc S2 = (M1 + M2 + M3 + M4) - (M5 + M6 + M7 + M8) .

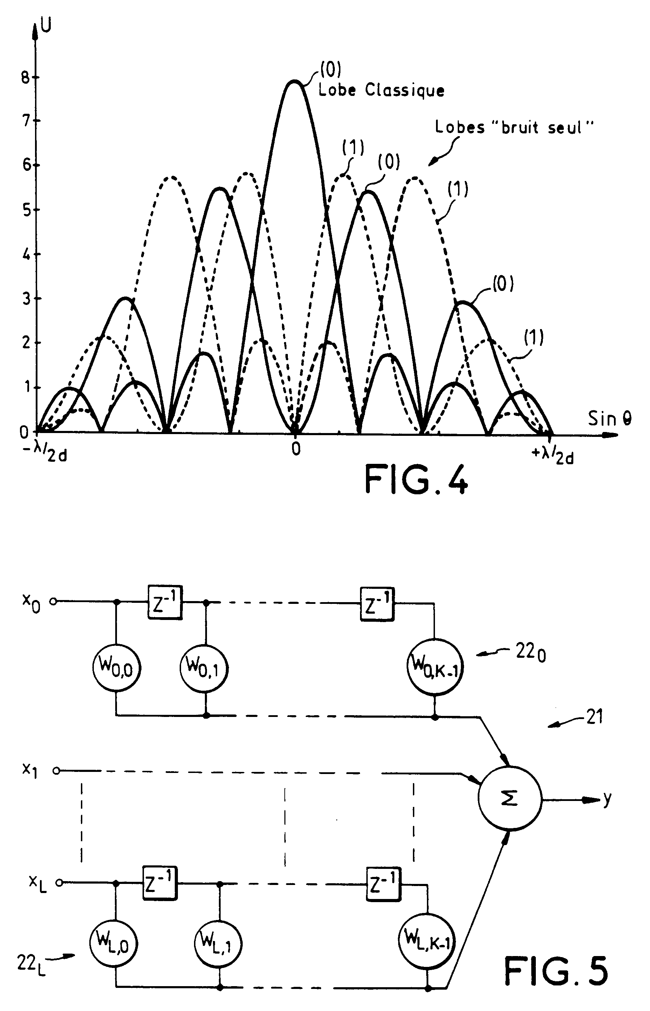

Il est à noter que ces huit combinaisons sont orthogonales (c'est-à-dire faisant partie d'une base de fonctions orthonormées telle qu'une base de décomposition de Haar). Le signal S1 correspond au lobe principal de directivité d'une voie classique, les autres signaux S2 à S8 peuvent être considérés comme ceux produits par des voies "bruit seul", puisque présentant un zéro dans la direction du lobe principal. On a représenté en figure 4 le diagramme donnant la valeur arbitraire U du lobe de directivité sur les différentes sorties S1 à S8 définies ci-dessus, pour chacun des deux ensembles de microphones, en fonction de l'angle formé entre la perpendiculaire au plan des deux ensembles de microphones et les différentes directions de mesure. Les abscisses sont graduées en valeurs de λ/d, λ étant la vitesse du son et d le pas des microphones..

Pour simplifier les explications, on suppose que les microphones utilisés sont omnidirectionnels. Si l'on prend en compte des diagrammes directifs, les explications exposées ici restent valables, à condition, bien entendu, que tous les microphones soient identiques, ou que l'on compense leurs disparités (par pondération complexe en amplitude et phase).

Pour la mise en oeuvre du procédé de l'invention, on effectue un pointage préalable de l'ensemble des microphones vers la source sonore (le locuteur). Ce pointage peut faire appel à tout procédé connu approprié, par exemple un procédé super-résolvant large bande, tel que AR, Capon, Music... pour déterminer le site et le gisement de la source sonore.

Il est important de noter que le procédé de l'invention ne nécessite, pour la formation des voies "bruit seul", aucun calcul. Les combinaisons décrites ci-dessus en référence au tableau de la figure 3 ne sont en fait que de simples mises en série (combinaisons "+") et l'utilisation d'inverseurs (pour les combinaisons "-").

Les signaux de sortie de tous les microphones sont échantillonnés de manière synchrone. On dispose donc de signaux prélevés tous au même instant. La stationnarité du bruit affectant tous ces signaux est ainsi assurée.

Bien que, d'un point de vue spatial, il subsiste une ambiguïté gauche/droite par rapport au locuteur (les lobes des microphones sont symétriques par rapport au milieu du réseau, comme c'est le cas pour des lobes images de réseaux d'antennes), cette ambiguïté n'affecte pas le fonctionnement du débruiteur puisque les signaux élaborés sont d'une part le signal somme de tous les signaux de microphones, et d'autre part ceux de voies de "bruit". La détermination de la position du locuteur est faite indépendamment de cette ambiguïté.

Les poids des différents filtres large bande peuvent être calculés par l'un des procédés super-résolvants figurant dans le tableau ci-dessous.

| | W | Puissance de sortie |
|---|---|---|
| Formation conventionnell | $\dfrac{1}{N} D(\theta)$ | $D^+(\theta) . \Gamma x . D(\theta)$ |
| Capon (ML) | $\dfrac{\Gamma^{-1} . D(\theta)}{D^+(\theta).\Gamma_x^{-1}.D(\theta)}$ | $\left[D^+(\theta).\Gamma_x^{-1}.D(\theta)\right]^{-1}$ |
| Lagunas | $\dfrac{\Gamma^{-1} . D(\theta)}{\left[D^+(\theta).\Gamma_x^{-2}.D(\theta)\right]^{-2}}$ | $D^+(\theta)\Gamma^{-1} . D(\theta)/(D^+(\theta) . \Gamma^{-2} . D(\theta)$ |
| AR (ME M) | $\Gamma_x^{-1} E$ | $\left(E^+.\Gamma_x^1 E\right)\left[D^+(\theta).\Gamma^{-1}E\right]^2$ |
| Goniométrie Music | $\Gamma_x^1 . V$ | $\lambda_k/\left|D^+(\theta)V\right|^2$ |

Dans ce tableau W est le vecteur poids des filtres, D $(\theta)$ et D$^+$ $(\theta)$ sont respectivement le vecteur conventionnel et son transposé conjugué, $\Gamma_x$ est la matrice interspectrale, $\Gamma_x^+$ et $\Gamma_x^{-1}$ sont respectivement la transposée conjuguée de $\Gamma_x$, et l'inverse (ou la pseudo-inverse) de $\Gamma_x$, les paramètres $\lambda_k$ et V désignent la plus petite valeur propre de $\Gamma_x$ et le vecteur propre associé. E est le vecteur constitué de la puissance du bruit pour sa première composante (les autres composantes étant nulles).

Le terme générique "super-résolvants" indique simplement que les procédés en question peuvent résoudre (discriminer) deux sources séparées par une distance inférieure à $\lambda/L$ (L étant la longueur totale de l'antenne physique composée de la série de huit microphones alignés et $\lambda$ la longueur d'onde.

Le traitement des différentes voies est à large bande, la matrice des covariances est alors une matrice interspectrale (matrice de corrélation des vecteurs d'observation). Le réseau bi-dimensionnel de microphones disposés en croix permet d'évaluer le site et le gisement de la source sonore par détection du maximum de la fonction $\lambda_k/|D^+(\theta)V|^2$ (figure 4), ce qui permet d'asservir le réseau à la position du locuteur. Cet asservissement se fait par pointage électronique (à la manière des antennes de radars de poursuite) du réseau de microphones en faisant varier le déphasage appliqué à leurs signaux respectifs.

Lorsque ce pointage est réalisé, on applique une transformation binaire (figure 3) aux signaux issus des microphones, ce qui fournit d'une part une voie signal bruité, et d'autre part sept voies "bruit seul" (dans le cas de 8 microphones). Un traitement vectoriel (du type LMS ou RLS par exemple) permet de filtrer cette valeur estimée du bruit. La soustraction de cette valeur estimée dudit signal bruité permet de réaliser un débruitage adaptatif.

Le traitement vectoriel par minimisation de l'erreur quadratique, et, de façon équivalente, la recherche du filtrage optimal, sont généralement réalisés par des techniques itératives de recherche de gradient.

Lorsque les signaux des microphones sont échantillonnés à la période Te avec s(k) = s|kTe|, l'algorithme d'adaptation du gradient déterministe est :

$$W(k+1) = W(k) - \frac{\mu}{2} \nabla E(k)$$
$$= W(k) + \mu\{E[s(k).X(k)] - \Gamma_x W(k)\}$$
$$= W(k) + \mu E[s(k)X(k) - X(k)X^T(k)W(k)]$$
$$= W(k) + \mu E[e(k)X(k)]$$

Dans ces équations μ désigne le pas d'incrémentation de l'algorithme, qui est positif et constant. De la valeur de ce pas dépendent la vitesse, la variance résiduellle, et la finesse de convergence de l'algorithme. Un algorithme avantageux pour la mise en oeuvre du traitement vectoriel est l'algorithme du gradient stochastique, encore appelé LMS. Cet algorithme utilise une estimation stochastique du gradient, de sorte que le vecteur de filtrage est ajusté conformément aux expressions suivantes :

$$W(k+1)=W(k)+\mu e(k)X(k)$$

$$e(k)=s(k)-W^T(k).X(k)$$

On a affaire ici à des expressions réelles puisque les signaux de parole sont considérés en bande de base, sans nécessité d'une démodulation complexe.

L'algorithme LMS permet de minimiser l'erreur quadratique moyenne d'un dispositif adaptatif par rapport à un signal de référence ("bruit seul") dont on connaît la valeur à chaque instant d'échantillonnage. Cet algorithme permet d'obtenir en moyenne la solution optimale

$$W_{opt}=\Gamma_x^{-1}.E[s(t)X(t)]$$

avec une variance proportionnelle au pas d'incrémentation μ et à la puissance du bruit recueilli par les microphones. Cet algorithme est avantageux du fait qu'il présente une bonne stabilité, mais on peut bien entendu utiliser d'autres algorithmes, par exemple celui du moindre carré récursif (RLS) dont la rapidité de convergence est plus élevée. Toutefois, on doit rechercher un compromis entre vitesse de convergence et variance résiduelle de l'erreur d'estimation.

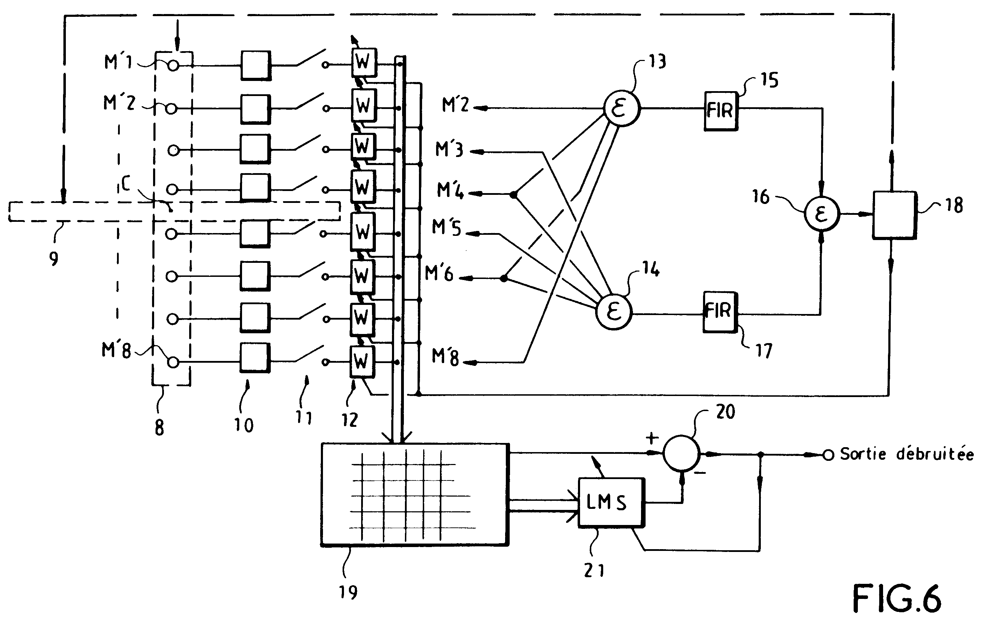

On a schématiquement représenté en figure 6 un exemple de réalisation d'un dispositif de mise en oeuvre du procédé de l'invention.

On a représenté en 8 un ensemble de huit microphones équi-espacés M'1 à M'8. L'autre ensemble 9, dessiné en traits interrompus, est disposé en croix par rapport au premier et coplanaire à celui-ci. Les branchements des microphones de ce second ensemble sont identiques à ceux des microphones de l'ensemble 8 jusqu'au dispositif de localisation, et n'ont pas été représentés pour la clarté du dessin.

Chacun des microphones de l'ensemble 8 est suivi d'un préamplificateur (dont l'ensemble est référencé 10), d'un dispositif d'échantillonnage (dont l'ensemble est référencé 11) et d'un filtre transversal non récursif (dont l'ensemble est référencé 12). Les sorties des microphones M'2, M'4, M'6 et M'8 sont reliées à un sommateur 13. Les sorties des filtres de l'ensemble 12 relatifs aux microphones M'3 à M'6 sont reliées à un autre sommateur 14.

La sortie du sommateur 13 est reliée via un filtre compensateur 15 (par exemple du type FIR) à une première entrée d'un sommateur 16, et la sortie du sommateur 14 est reliée via un filtre 17, identique au filtre 15, à une deuxième entrée du sommateur 16.

La sortie du sommateur 16 est reliée à un dispositif 18 de localisation du locuteur. Ce dispositif 18 d'asservissement en site et gisement des deux ensembles de microphones 8 et 9 est du type super-résolvant, fonctionnant selon l'un des procédés mentionnés ci-dessus.

Les échantillonneurs 11 des microphones M'1 à M'8 sont par ailleurs reliés à un dispositif combineur 19 à transformation binaire, du type décrit ci-dessus en référence à la figure 3. La sortie "lobe principal" (combinaison ne comportant que des additions) du combineur 19 est reliée à l'entrée (+) d'un soustracteur 20. Les sept autres sorties de "bruit seul" sont reliées via un filtre adaptatif 21 à l'entrée (-) du soustracteur 20. Le filtre 21 est par exemple un filtre transversal, dont les coefficients sont recalculés à chaque trame de parole (1 trame = 25,6 ms par exemple) de façon à minimiser le bruit à la sortie du soustracteur 20.

Les deux ensembles de microphones 8 et 9 réalisent un double échantillonnage spatial de l'émission vocale du locuteur. On forme aux sorties des sommateurs 13 et 14 deux antennes physiques présentant le même lobe principal, mais à deux fréquences séparées d'une octave. Les filtres compensateurs 15 et 17 corrigent les dispersions entre les fréquences extrêmes du spectre sonore reçu. Les signaux issus des deux filtres 15, 17 sont additionnés en 16. On obtient donc à la sortie de 16 un lobe de directivité constant (correspondant aux lobes principaux des ensembles 8 et 9). Ceci est vrai lorsque la normale au plan formé par les ensembles 8 et 9 (on assimile les microphones à des points coplanaires) et passant par le point d'intersection C des ensembles 8 et 9 est dirigée vers le locuteur (lui aussi supposé ponctuel). Lorsque ceci n'est pas le cas, l'un au moins des deux lobes principaux est décalé par rapport au centre (C) du diagramme de directivité correspondant, et le signal de sortie de 16 en est affecté (perte de puissance). Le dispositif d'asservissement du localisateur 18 oriente alors en site et/ou en gisement, de façon connue en soi, le plan de microphones pour retrouver à la sortie de 16 le maximum d'une fonctionnelle.

On a représenté de façon simplifiée en figure 5 un exemple de réalisation du filtre adaptatif large bande 21 de la figure 6. Ce filtre comporte, pour chacune des (L-1) voies de microphones $x_o$ à $x_L$ un filtre élémentaire, respectivement référencé $22_o$ à $22_L$. Chacun de ces filtres élémentaires comporte, de façon connue en soi, k blocs de traitement en cascade. Chaque bloc de traitement comporte essentiellement une cellule de retard $Z^{-1}$ (par exemple sous forme d'un registre tampon), et une cellule de convolution $W_{i,j}$ (i allant de o à L pour les voies $22_o$ à $22_L$ et j allant de o à k-1 dans chaque voie). Le premier bloc de traitement ($W_{o,o}$ à $W_{L,o}$) ne comporte pas de cellule de retard. Les sorties des voies $22_o$ à $22_L$ sont reliées à un additionneur parallèle 23. Les poids des différents blocs de traitement (coefficients affectant les valeurs discrètes retardées traitées par chaque bloc de traitement) sont asservis au signal de sortie de l'additionneur 20.

**Revendications**

1. Procédé de débruitage vectoriel d'une source sensiblement ponctuelle de signaux sonores, selon lequel on effectue une prise de son à l'aide d'au moins quatre microphones (M1 ... M4) équi-espacés, disposés dans un plan devant la source de signaux à traiter, caractérisé par le fait que l'on échantillonne de façon synchrone les signaux de tous les microphones (11), que l'on forme des combinaisons linéaires par additions et soustractions des signaux desdits microphones de façon à obtenir, dans la direction de la source un lobe principal de sensibilité, la somme de tous les signaux de sortie des microphones représentant le signal bruité, les autres combinaisons comportant chacune autant de soustractions que d'additions de signaux et étant utilisées en tant que sources de bruit seul et traitées par un filtre vectoriel adaptatif (21) pour produire une estimation du bruit que l'on soustrait au signal bruité.

2. Procédé selon la revendication 1, caractérisé par le fait que les microphones sont disposés en deux ensembles (8, 9) coplanaires s'intersectant, la normale au plan ainsi formé et passant par le point d'intersection des deux ensembles étant dirigée vers la source de signaux sonores à traiter.

3. Procédé selon la revendication 2, caractérisé par le fait que pour chaque ensemble de microphones, les microphones forment deux antennes physiques ayant le même lobe principal de directivité à deux fréquences séparées d'une octave, et que l'on additionne (16) les signaux de ces deux antennes pour asservir (18) l'orientation en site et gisement du plan de microphones par rapport à la source de signaux sonores.

4. Procédé selon l'une des revendications 2 ou 3, caractérisé par le fait que l'on détermine l'orientation en site et gisement du plan de microphones par rapport à la source de signaux sonores par un procédé super-résolvant.

5. Procédé selon la revendication 4, caractérisé par le fait que le procédé super-résolvant est choisi parmi les procédés CAPON, LAGUNAS, AR ou MUSIC.

6. Procédé selon l'une des revendications précédentes, caractérisé par le fait que le débruitage vectoriel met en oeuvre un algorithme du type LMS ou RLS.

7. Dispositif de débruitage vectoriel d'une source sensiblement ponctuelle de signaux sonores, caractérisé par le fait qu'il comporte au moins un ensemble (8, 9) d'au moins quatre microphones (M'1 ... M'8) équi-espacés suivis chacun d'un préamplificateur (10), d'un échantillonneur (11), les échantillonneurs étant tous synchrones, et reliés à une matrice de transformation binaire (19) comportant des connexions de mise en série et des inverseurs, une première de ses sorties (S1) correspondant à la mise en série de toutes les entrées, ses autres sorties (S2 ... S8) correspondant chacune à une combinaison différente de mises en série et d'inversions d'entrées, la première sortie (S1) de ce dispositif combineur étant reliée à l'entrée (+) d'un soustracteur (20), et les autres étant reliées via un filtre adaptatif (21) à l'entrée (-) du soustracteur.

8. Dispositif selon la revendication 7, caractérisé par le fait qu'il comporte deux ensembles (8, 9) orthogonaux et coplanaires de microphones, les sorties des échantillonneurs (11) étant reliées chacune via un filtre (12), pour chacun des deux ensembles, pour une première partie d'entre elles, à un premier sommateur (13), et pour l'autre partie à un second sommateur (14), les deux sommateurs étant reliés chacun via un filtre compensateur (15, 17) à un autre sommateur (16) dont la sortie est reliée à un dispositif (18) d'asservissement en position du plan de microphones.

**Claims**

1. Method of vectorial noise reduction of a substantially point source of sound signals, according to which a sound capture is performed with the aid of at least four equispaced microphones (M1 ... M4) arranged in a plane in front of the source of signals to be processed, characterized in that the signals from all the microphones (11) are sampled synchronously, in that linear combinations are formed by additions and subtractions of the signals from the said microphones so as to obtain, in the direction of the source, a main sensitivity lobe, the sum of all the output signals from the microphones representing the noisy signal, the other combinations each comprising as many subtractions as additions of signals and being used as noise-only sources and processed by an adaptive vectorial filter (21) so as to produce an estimate of the noise which is subtracted from the noisy signal.

2. Method according to Claim 1, characterized in that the microphones are arranged in two coplanar sets (8, 9) which intersect, the normal to the plane thus formed and passing through the point of intersection of the two sets being directed towards the source of sound signals to be processed.

3. Method according to Claim 2, characterized in that for each set of microphones, the microphones form two physical antennas having the same main directivity lobe at two frequencies separated by an octave, and in that the signals from these two antennas are added together (16) so as to slave (18) the orientation, in elevation and bearing, of the plane of microphones with respect to the source of sound signals.

4. Method according to either of Claims 2 and 3, characterized in that the elevational and bearing orientation of the plane of microphones with respect to the source of sound signals is determined by a super-resolving method.

5. Method according to Claim 4, characterized in that the super-resolving method is chosen from among the CAPON, LAGUNAS, AR or MUSIC methods.

6. Method according to one of the preceding claims, characterized in that the vectorial noise reduction implements an algorithm of the LMS or RLS type.

7. Device for the vectorial noise reduction of a substantially point source of sound signals, characterized in that it comprises at least one set (8, 9) of at least four equispaced microphones (M'1 ... M'8) each followed by a preamplifier (10), by a sampler (11), the samplers all being synchronous, and linked to a binary transformation matrix (19) comprising serializing connections and inverters, a first of its outputs (S1) corresponding to the placing in series of all the inputs, its other outputs (S2 ... S8) each corresponding to a different combination of serializations and inversions of inputs, the first output (S1) of this combiner device being linked to the input (+) of a subtractor (20), and the others being linked via an adaptive filter (21) to the input (-) of the subtractor.

8. Device according to Claim 7, characterized in that it comprises two orthogonal and coplanar sets (8, 9) of microphones, the outputs of the samplers (11) each being linked via a filter (12), for each of the two sets, for a first portion of these outputs, to a first summator (13), and for the other portion to a second summator (14), the two summators each being linked via a compensating filter (15, 17) to another summator (16) whose output is linked to a device (18) for the positional slaving of the plane of microphones.

**Patentansprüche**

1. Verfahren zur vektoriellen Rauschentfernung für eine im wesentlichen punktförmige Quelle von Tonsignalen, bei dem eine Tonaufnahme mit Hilfe von wenigstens vier gleich beabstandeten Mikrophonen (M1 ... M4) ausgeführt wird, die in einer Ebene vor der Quelle der zu verarbeitenden Signale angeordnet sind, dadurch gekennzeichnet, daß die Signale sämtlicher Mikrophone (11) synchron abgetastet werden, daß durch Additionen und Subtraktionen der Signale der Mikrophone Linearkombinationen gebildet werden, derart, daß in Richtung der Quelle eine Hauptempfindlichkeitskeule erhalten wird, wobei die Summe sämtlicher Ausgangssignale der Mikrophone das verrauschte Signal darstellt, und wobei die anderen Kombinationen jeweils ebenso viele Subtraktionen wie Additionen von Signalen enthalten und als reine Rauschquellen verwendet werden und durch ein adaptives vektorielles Filter (21) verarbeitet werden, um eine Schätzung des Rauschens zu erzeugen, die vom verrauschten Signal subtrahiert wird.

2. Verfahren nach Anspruch 1, dadurch gekennzeichnet, daß die Mikrophone in zwei sich schneidenden koplanaren Gruppen (8, 9) angeordnet sind, wobei die Normale zu der so gebildeten Ebene, die durch den Schnittpunkt der beiden Gruppen verläuft, zur Quelle der zu verarbeitenden Tonsignale gerichtet ist.

3. Verfahren nach Anspruch 2, dadurch gekennzeichnet, daß für jede Gruppe von Mikrophonen die Mikrophone zwei physische Antennen mit derselben Richtcharakteristik-Hauptkeule mit zwei um eine Oktave getrennten Frequenzen bilden und daß die Signale dieser beiden Antennen addiert (16) werden, um die Höhen- und Seitenorientierung der Ebene der Mikrophone in bezug auf die Quelle der Tonsignale zu regeln (18).

4. Verfahren nach einem der Ansprüche 2 oder 3, dadurch gekennzeichnet, daß die Höhen- und Seitenorientierung der Ebene der Mikrophone in bezug auf die Quelle der Tonsignale durch ein hochauflösendes Verfahren bestimmt wird.

5. Verfahren nach Anspruch 4, dadurch gekennzeichnet, daß das hochauflösende Verfahren aus den Verfahren CAPON, LAGUNAS, AR oder MUSIC gewählt wird.

6. Verfahren nach einem der vorangehenden Ansprüche, dadurch gekennzeichnet, daß die vektorielle Rauschentfernung einen Algorithmus des Typs LMS oder RLS ausführt.

7. Vorrichtung zur vektoriellen Rauschentfernung für eine im wesentlichen punktförmige Quelle von Tonsignalen, dadurch gekennzeichnet, daß sie Wenigstens eine Einheit (8, 9) aus wenigstens vier gleich beabstandeten Mikrophonen (M'1 ... M'8) enthält, denen jeweils ein Vorverstärker (10) und eine Abtasteinrichtung (11) folgt, wobei alle Abtasteinrichtungen synchronisiert sind und mit einer Binärtransformationsmatrix (19) verbunden sind, die Serialisierungsanschlüsse und Inverter enthält, wobei ein erster ihrer Ausgänge (S1) der Serialisierung sämtlicher Eingänge entspricht und ihre weiteren Ausgänge (S2 ... S8) einer jeweils anderen Kombination von Serialisierungen und Invertierungen der Eingangssignale entsprechen, wobei der erste Ausgang (S1) dieser Kombinationsvorrichtung mit dem Eingang (+) eines Subtrahierers (20) verbunden ist und die anderen über ein adaptives Filter (21) mit dem Eingang (-) des Subtrahierers verbunden sind.

8. Vorrichtung nach Anspruch 7, dadurch gekennzeichnet, daß sie zwei orthogonale und koplanare Gruppen (8, 9) von Mikrophonen enthält, wobei die Ausgänge der Abtasteinrichtungen (11) jeweils über ein Filter (12) für jede der beiden Gruppen für einen ersten Teil von ihnen mit einem ersten Summierer (13) und für den anderen Teil mit einem zweiten Summierer (14) verbunden sind, wobei die beiden Summierer jeweils über ein Kompensationsfilter (15, 17) mit einem weiteren Summierer (16) verbunden sind, dessen Ausgang mit einer Vorrichtung (18) zur Regelung der Position der Mikrophonebene verbunden ist.

FIG.1

FIG.2

FIG.3

FIG.4

FIG.5

FIG.6

EP 0 605 281 B1